# EUROPEAN PATENT APPLICATION

(11) **EP 4 614 266 A1**
(43) Date of publication of application: **10.09.2025**
(21) Application number: 24162293.5
(22) Date of filing: 08.03.2024
(51) Int. Cl.: G05B 23/02

(54) **ARRANGING DISPLAY ELEMENTS TO BE DISPLAYED ON AN OPERATOR TERMINAL OF A PROCESS CONTROL SYSTEM**

(71) Applicant: ABB SCHWEIZ AG, 5400 Baden (CH)
(72) Inventor: DONZELLA, Fabio, 16132 Genova (IT); COSTA, Elisa, 16157 Genoa (IT)
(74) Representative: Kransell & Wennborg KB

(57) **Abstract**

A display element handling device (12; 17) for a process control system (10) receives an alarm or event from the process control system (10) when a current display element combination is displayed to a process control system operator on the operator terminal (12), which current display element combination comprises display elements selected by the process control system operator, determines a situation handling display element combination directed towards addressing the alarm or event, which situation handling display element combination comprises one or more display elements linked to the alarm or event to be displayed to the process control system operator on the operator terminal, changes, if receiving a selection from the process control system operator in relation to the situation handling display element combination, a screen of the operator terminal (12) according to the selection, and updates the situation handling display element combination.

## Description

### TECHNICAL FIELD

The invention relates to the arranging of display elements to be displayed on an operator terminal of a process control system. More particularly, the invention relates to a display element handling device for a process control system comprising an operator terminal, a process control system comprising such a display element handling device as well as to a method, computer program and computer program product for arranging display elements to be displayed on an operator terminal of a process control system.

### BACKGROUND

An industrial process being controlled in a process control system can be monitored by operators via corresponding operator terminals. During such monitoring it may be of interest for an operator to view a certain set of display elements, for instance in the form of display windows, on an operator screen in order to solve a task.

In such a situation, an alarm or event may occur that needs to be resolved. In order to resolve the situation, it may be necessary to display other display elements than the ones needed for solving the task. Furthermore, it is possible that the operator needs to return to the task after handling the alarm or event. However, then it is possible that the display elements needed for the task are no longer available. This is both cumbersome as well as time consuming for the operator.

There is thus a need for improving on the situation.

The operator may lose a big amount of time about configuring the screen of the operator terminal to get the info needed to perform a proper analysis and execute proper actions to manage the alarms and events currently active on the system. The current process control system provides a way to pre-configure the system to react to specific alarm/event, allowing the operator terminal screen to be re-organized following a predefined scheme. Unfortunately, this approach requires a big amount of time for the engineering of the system, and it can cover only partially the possible scenarios.

### SUMMARY

One object of the invention is therefore to improve the way that display elements are selected and displayed when an alarm or event occurs in a process control system.

This object is according to a first aspect achieved by a display element handling device for a process control system comprising an operator terminal, the display element handling device comprising a processor configured to:
receive an alarm or event from the process control system when a current display element combination is displayed to a process control system operator on the operator terminal, which current display element combination display elements selected by the process control system operator,
determine a situation handling display element combination directed towards addressing the alarm or event, the situation handling display element combination comprising one or more display elements linked to the alarm or event to be displayed to the process control system operator on the operator terminal,
change, if receiving a selection from the process control system operator in relation to the situation handling display element combination, a screen of the operator terminal according to the selection, and update the situation handling display element combination.

The object is according to a second aspect achieved through a process control system comprising a display element handling device according to the first aspect.

The object is according to a third aspect achieved through a method for arranging display elements to be displayed on an operator terminal of a process control system, the method being performed by a display element handling device and comprising:
receiving an alarm or event from the process control system when a current display element combination is displayed to a process control system operator on the operator terminal, which current display element combination comprises display elements selected by the process control system operator,
determining a situation handling display element combination directed towards addressing the alarm or event, the situation handling display element combination comprising one or more display elements linked to the alarm or event to be displayed to the process control system operator on the operator terminal,
changing, if receiving a selection from the process control system operator in relation to the situation handling display element combination, a screen of the operator terminal according to the selection, and updating the situation handling display element combination.

The object is according to a fourth aspect further achieved through a computer program for arranging display elements to be displayed on an operator terminal of a process control system, the computer program comprising computer program code which when run in a processor of a display element handling device, causes the display element handling device to:
receive an alarm or event from the process control system when a current display element combination is displayed to a process control system operator on the operator terminal, which current display element combination comprises display elements selected by the process control system operator,
determine a situation handling display element combination directed towards addressing the alarm or event, the situation handling display element combination comprising one or more display elements linked to the alarm or event to be displayed to the process control system operator on the operator terminal,
change, if receiving a selection from the process control system operator in relation to the situation handling display element combination, a screen of the operator terminal according to the selection, and update the situation handling display element combination.

The object is according to a fifth aspect further achieved through a computer program product for arranging display elements to be displayed on an operator terminal of a process control system, the computer program product comprising a data carrier with the computer program with the computer program code according to the fourth aspect.

The updating of the situation handling display element combination may be based on the selection relating to the situation handling display element combination.

The display elements may comprise windows.

In a first variation of the first aspect, the processor is further configured to display the current display element combination on the operator terminal to the process control system operator, which current display element combination comprises display elements selected by the process control system operator.

In a corresponding variation of the third aspect, the method further comprises displaying the current display element combination on the operator terminal to the process control system operator, which current display element combination comprises display elements selected by the process control system operator.

The display elements of the situation handling display element combination may comprise display elements necessary for handling the situation for which the alarm or event occurs.

Furthermore, all the display elements may have a priority in relation to the alarm or event and the display elements necessary for handling the alarm or event have a higher priority than the display elements of the current display element combination. The priorities of the display elements may additionally change based on the frequency of usage by the process control system operator. A priority may more particularly increase the more frequent the use is.

The selection may be a selection of a modified situation handling display element combination in which at least some of the display elements of the current display element combination are retained and the changing of the screen of the operator is a changing to displaying the situation handling display element combination.

In this case the processor may be further configured to modify the situation handling display element combination based on the current display element combination before display.

In this case, the method may further comprise modifying the situation handling display element combination based on the current display element combination before display.

The modifying of the situation handling display element combination may comprise including display elements from the current display element combination in the modified situation handling display element combination according to their priorities.

In this case according to the first aspect, the processor may be further configured to adjust the priorities of at least some display elements in the current display element combination.

In this case according to the second aspect, the method may further comprise adjusting the priorities of at least some display elements in the current display element combination.

The modifying of the situation handling display element combination may comprise retaining the display elements of the current display element combination.

Alternatively, the selection may be a selection of the presented situation handling display element combination and the changing the screen of the first operator terminal may be a changing to displaying the situation handling display element combination.

In this case the displaying of the situation handling display element combination may comprise adding display elements from the current display element combination to the situation handling display element combination and where display elements that cannot be fit in with the display elements of the situation handling display element combination are omitted.

The determining of a situation handling display element combination as well as the updating and modifying of the situation handling display element combination may be based on a machine learning model created using pattern recognition, where unknown patterns related to the habits of the process control system operator are detected. The pattern recognition may use an unsupervised classification where display elements are assigned priorities or weights. Additionally or instead, the machine learning model may be based on clustering, which clustering may be a K-means clustering.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The invention will now be described in more detail in relation to the enclosed drawings, in which:
fig. 1 schematically shows a process control system including a first, second and third operator terminal,
fig. 2 shows a block schematic of the first operator terminal,
fig. 3 shows a block schematic of a display element handling server,
fig. 4 schematically shows a first display element being displayed by the first operator terminal,
fig. 5 shows a flow chart of a number of method steps in a method of arranging display elements for being displayed on an operator terminal,
fig. 6 schematically shows a current display element combination being displayed by the first operator terminal,
fig. 7 schematically shows and alarm and two selectable icons representing a situation handling display element combination and a modified situation handling display element combination,
fig. 8 schematically shows the situation handling display element combination,
fig. 9 schematically shows the modified situation handling display element combination, and
fig. 10 shows a computer program product in the form of a CD ROM disc with a computer program performing a display element arranging function.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

The invention is generally directed towards a process control system and more particularly towards arranging display elements for being displayed on an operator terminal in relation to a received alarm or event.

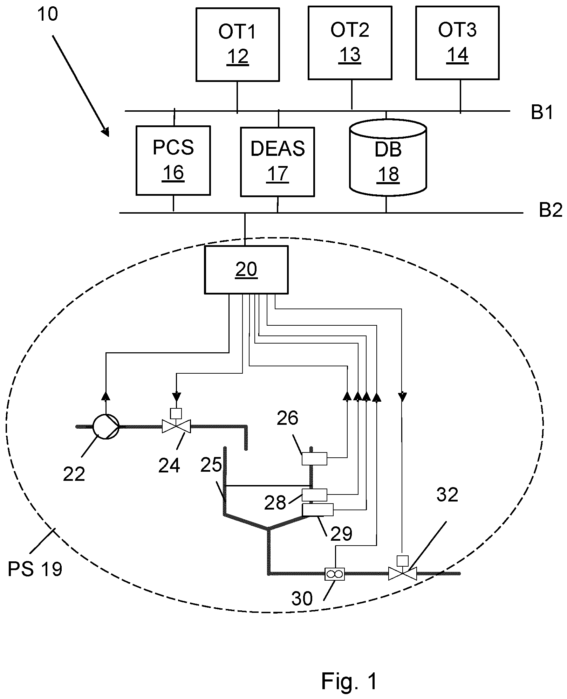

Fig. 1 schematically shows a process control system 10 for controlling an industrial process or perhaps part of an industrial process. Typical processes are electrical power generation, transmission, distribution and supply processes, water purification and distribution processes, oil and gas production and distribution processes, petrochemical, chemical, pharmaceutical and food processes, and pulp and paper production processes. These are just some examples of processes where the system can be applied. There exist countless other processes. Normally there may in such a system be one or more controllers having some local software for controlling one or more pieces of process control equipment. The process control equipment may comprise equipment that influence or measure different properties of the technical process. A piece of process control equipment may for instance be a pump, a motor, a valve, etc. A process, or a part of a process, may be controlled via a server, which then typically communicates with a controller for providing local control. The process may be monitored through an operator terminal or workstation, which communicates with the server. Such a workstation or operator terminal is also a form of user terminal.

In fig. 1 the system 10 therefore includes a number of operator terminals OT1 12, OT2 13 and OT3 14 connected to a first bus B₁. There is in this case a first operator terminal OT1 12, a second operator terminal OT2 13 and a third operator terminal OT3 14. There is furthermore a second bus B2 and between the first and second busses B1 and B2 there is connected a process control server PCS 16 with a control function for controlling the process and a database DB 18 for storing of display element weights. There is also a display element arranging server DEAS 17 connected between the first and the second buses B1 and B2. To the second bus B2 there is furthermore connected a controller 20 (Process Controller or Programmable Logic Controller (PLC)) for providing local control in the system 10.

In the figure there is only provided one controller 20. It should however be realized that there may be several more controllers in the system 10. The controller 20 is connected to one or more pieces of process control equipment. As an example, the controller 20 is shown as being connected to process control equipment in a process section PS 19 for controlling a part of the industrial process, which process section 19 includes a first inlet pipe leading to a tank 25 and a second outlet pipe leaving the tank 25. In the first pipe there is provided a pump 22 that pumps fluid into the first pipe as well as a first valve 24. In the tank 25 there are provided two level sensors 26 and 28 and in the outlet pipe there is provided a flow meter 30 and a second valve 32. There is also a temperature sensor 29 in the tank 25. The pipes, tank, valves and sensors are examples of process control equipment. The level sensors 26 and 28 measure the physical quantity liquid volume, the temperature sensor measures the physical quantity liquid temperature and the flow meter 30 measures the physical quantity volumetric flow rate of the liquid. The controller 20 may receive control input values from the pump 22, level sensors 26 and 28 and temperature sensor 29 and regulate the liquid level in the tank 25 based on these control input values through controlling the first valve 24. It also receives control input values from the flow meter 30 and temperature sensor 29 and controls the second valve 32 for regulating the output fluid flow. The above-described control is merely an example of one type of control in a process control example. It should be realized that several different other types of control are possible and that several other types of physical quantities can be measured. It is for instance possible to also measure pressure. The above-described process control equipment are therefore also merely examples of process control equipment that can be used. The controller and process control equipment are all examples of process control devices.

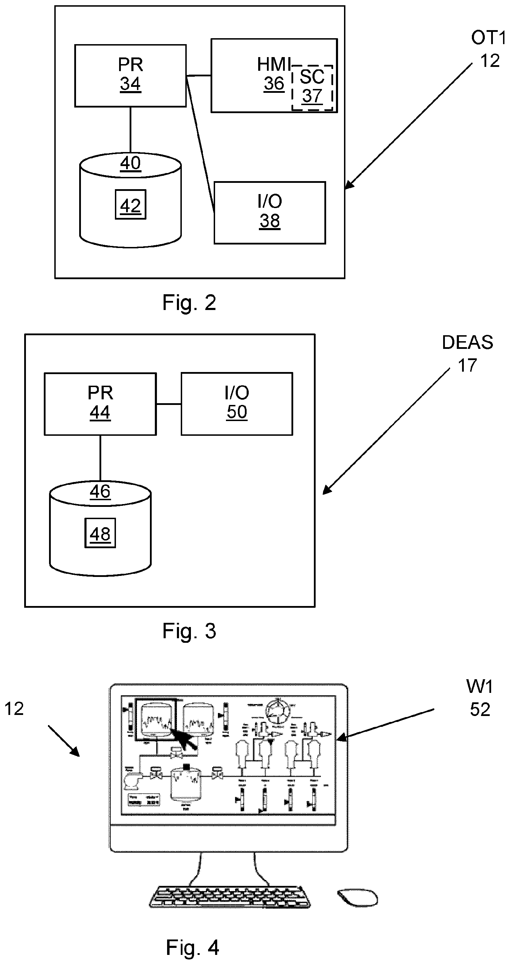

Fig. 2 schematically shows one realization of the first operator terminal OT1. There is a processor PR 34 and a data storage 40 with computer program instructions 42 that, when executed by the processor 34, implements a first version of a display element arranging function. There is also an input/output (I/O) interface 38 for communication with the other entities in the process control system and especially for communicating with the control server 16 and/or the database 18. In case the operator terminal does not implement the first version of the display element arranging function, the I/O interface 38 may be used for communicating with the display element arranging server instead. Finally, there is a human machine interface HMI 36 which comprises a screen SC 37 for displaying information about the process and the process control system to a user, such as an operator. The screen 37 may be a touch screen allowing the operator to input data and commands as well as to move a pointer or to selected objects in different windows. It should be realized that the HMI 36 may also or instead comprise other means of allowing user input, such as a mouse or trackball, a keyboard or a keypad.

Fig. 3 schematically shows one realization of the display element handling server 17. There is a processor 44 and a data storage DS 46 with computer program instructions 48 that, when executed by the processor 44, implements a second version of the display element arranging function. There is also an input/output (I/O) interface 50 for communication with the operator terminals.

The operator terminals may display various display elements, such as windows, of the process control system, where one type of window is a process control window that may depict parts of the process control system such as graphical objects representing process control devices, for instance in the form of face plates, which objects may be interconnected. A process control window or process control flow window is a window of objects representing process control devices, where process control devices are devices in a process flow of the industrial process being controlled by the process control system. It should here be realized that it is possible with also other types of display objects in the window. It is also possible with other types of windows. Other windows may depict data about objects in the process control system such as data about a process control device, like charts or graphs of physical quantities of the process control device. A first display element in the form of a first window W1 52 is schematically shown in fig. 4.

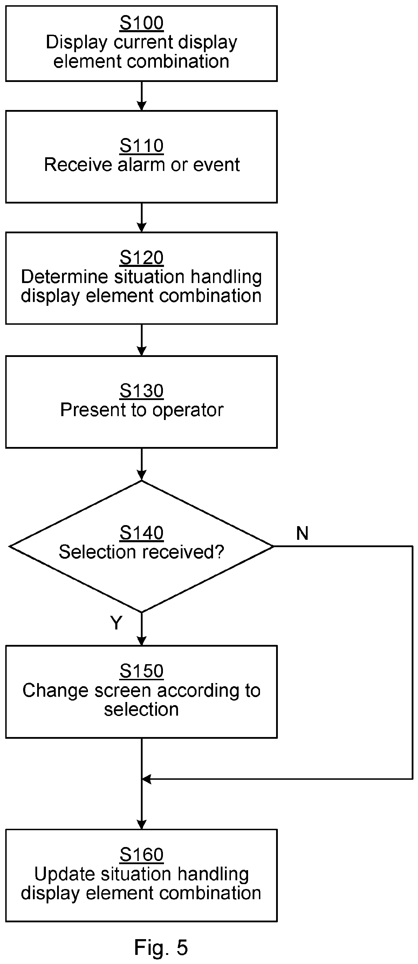

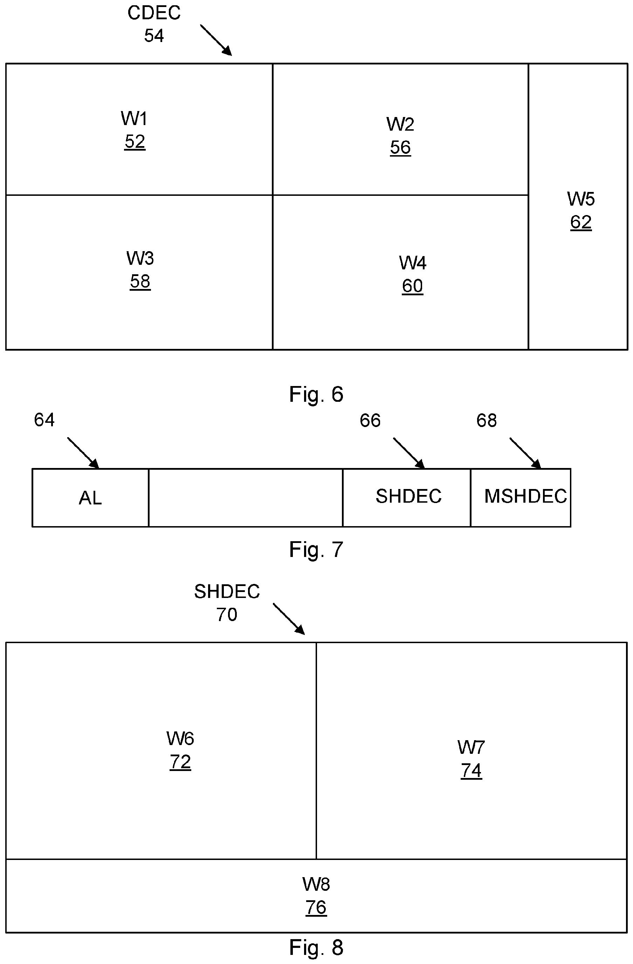

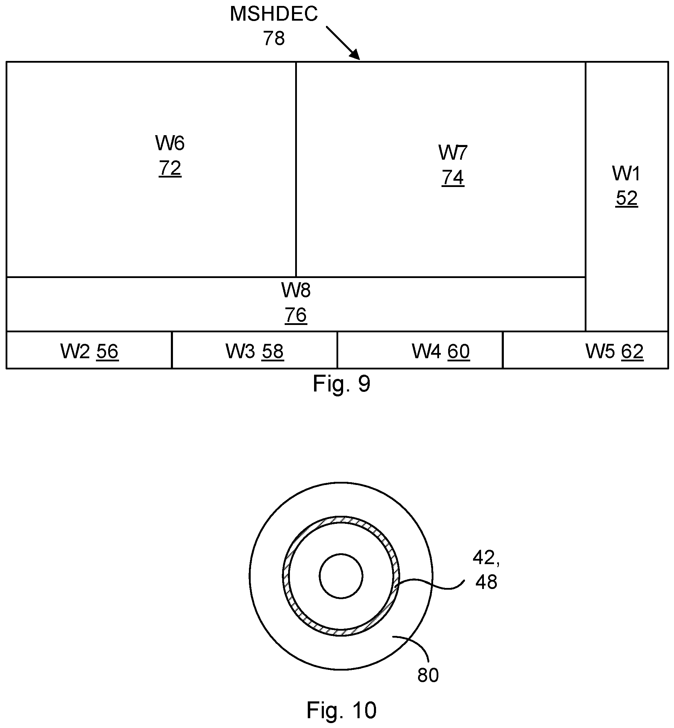

Now the operation of a method of arranging display elements for being displayed on an operator terminal will be described with reference also being made to fig. 5, 6, 7, 8 and 9, where fig. 5 shows a number of steps in the method of arranging display elements for being displayed on an operator terminal and being performed by the display element arranging function of the first operator terminal, fig. 6 shows a current display element combination being displayed on the first operator terminal, fig. 7 schematically shows an alarm and two selectable buttons representing a situation handling display element combination and a modified situation handling display element combination, respectively, fig. 8 shows the situation handling display element combination and fig. 9 shows the modified situation handling display element combination.

In the variation described here, the method is performed by the first version of the display element arranging function in the first operator terminal 12. Thereby, the first operator terminal 12 may be considered to be a display element handling device.

The operator of the first operator terminal 12, which is a process control system operator, is initially observing the current display element combination CDEC 54, i.e. a combination of display elements being displayed on the first operator terminal 12. Thus, the current display element combination 54 is being displayed on the first operator terminal 12, S100. The current display element combination 54 thus comprises a number of display elements, here in the form of windows, and at least some of these have also been selected by the operator. As an example, there is a first window W1 52, a second window W2 56, a third window W3 58, a fourth window W4 60 and a fifth window W5 62. These windows are mere examples of windows that could be used by the operator and they may be expanded or diminished. There may also be more or fewer windows in the current display element combination 54. Additionally, the windows may have been selected by the operator in order to solve a task.

At this point in time the display element arranging function receives an alarm or event from the process control system 10 notifying the operator about a situation in the process control system 10, S110. The alarm or event from the process control system 10 is thus received when the current display element combination 54 is displayed to the operator on the operator terminal 12.

For instance, the level sensor 28 may generate an alarm or event if a level in the tank 25 is exceeded. Based on the alarm or event, the display element arranging function determines a situation handling display element combination SHDEC 70. This is a combination of display elements that are directed towards addressing or handling the above-mentioned situation that the alarm or event notifies. The display element combination may be a number of display elements, such windows, with information that is necessary for the operator to handle the alarm or event. The display elements of the situation handling display element combination 70 thus comprise display elements necessary for handling the situation for which the alarm 64 or event occurs. As an example, the situation handling display element combination 70 comprises a sixth window W6 72, a seventh window W7 74 and an eighth window W8 76. Thus, the situation handling display element combination 70 comprises one or more display elements 72, 74, 76 linked to the alarm or event and these display elements 72, 74, 76 are supposed to be displayed to the process control system operator on the operator terminal 12.

The existence of the situation handling display element combination 70 is then presented to the operator, S130. In the present case the existence is presented together with the alarm AL 64 or event as a first selectable button 66. Also, a second selectable button 68 is in this case presented, which second selectable button 68 represents a modified situation handling display element combination MSHDEC.

The operator may then make a selection using one of the buttons 66, 68, which selection may involve a selection of the situation handling display element combination 70 or the modified situation handling display element combination MSHDEC. If a selection is received by the display element arranging function from the process control system operator in relation to the situation handling display element combination 70, S140, then the screen of the first operator terminal 12 is changed according to the selection, S150.

If for instance the operator selects the situation handling display element combination 70, then this combination is displayed on the first operator terminal 12, while if the operator selects the modified situation handling display element combination, then this combination is displayed on the operator terminal 12.

In the modified situation handling display element combination, at least some and with advantage all of the display elements of the current display element combination 54 are retained, while at the same time the display elements of the situation handling display element combination 70 are shown. One example of the modified situation handling display element combination MSHDEC 78 is shown in fig. 9, where it can be seen that the sixth, seventh and eighth windows 72, 74, 76 from the situation handling display element combination 70 are displayed together with the first, second, third, fourth and fifth windows 52, 56, 58, 60, 62 of the current display element combination 54. In this example the second, third, fourth and fifth windows 56, 58, 60, 62 have been minimized in order to be possible to fit in the screen 37 of the first operator terminal 12. The first window 52 is reduced in size but not minimized. Thereby the changing of the screen 37 of the operator is a changing to displaying the situation handling display element combination and the display element arranging function further modifies the situation handling display element combination based on the current display element combination before display is being made.

When the situation handling display element combination 70 is selected, the changing of the screen 37 of the first operator terminal 12 is a changing to displaying the situation handling display element combination. In this case it is possible that display elements of the current display element combination 54 are added to the situation handling display element combination 70. However, display elements of the current display element combination 54 that cannot be fit in with the display elements of the situation handling display element combination may be omitted. These superfluous display elements may thus be removed.

After the change of screen, S150, the display element arranging function updates the situation handling display element combination 70 based on the selection, S160.

As can be seen, it is possible for the operator to not select any of the two combinations. He or she may thus ignore them. This non-choice may also be considered in the updating of the situation handling display element combination, S160.

As mentioned earlier, the method may be performed by the second version of the display element arranging function in the display element arranging server 17. In this case the server is a display element handling device. Furthermore, in this case the display element arranging function does not display the current display element combination. It may provide the alarm and buttons of fig. 7 to the first operator terminal 12 and receive a possible selection made by the operator therefrom. If the operator selected the situation handling display element combination 70, then the display element arranging function may provide the first operator terminal 12 with this combination. If the operator selects the modified situation handling display element combination, then the display element arranging function may receive information about the current display element combination 54 from the first operator terminal 12 and determine the modified situation handling display element combination 78 based on this information and the original situation handling display element combination 70.

Some more aspects of the display element arranging function will now be described.

The display element arranging function provides an automatic procedure that allows the system to react properly to any alarm and event (configurable), without interfering with the current display element combination, i.e with a current HMI status and possible operator activities. The automatic procedure opens all the possible display elements or interfaces useful for the alarm/event management considering a current system status, system configuration, system history and operator habits (user configuration and previous session history), continuously learning and improving relying on a dedicated Artificial Intelligence/Machine Learning (AI/ML) algorithm.

The display element arranging function uses a combination of AI/ML techniques to learn from the operator configuration choices, i.e. display element combinations, and to suggest the most useful set of views and information to be provided to the operator.

Specifically, the display element arranging function receives an Event and/or an Alarm from the field. The display element arranging function may comprise an AI algorithm, which analyses system status and operator habits (user configuration and previous session history) and then proposes a possible integration of the HMI configuration selected as the best choice (the situation handling display element combination) with the status of the HMI itself (the current display element configuration). To allow the applying of the configuration, the display element arranging function enables two buttons related to the specific alarm/event that allow the operator to apply completely or partially the configuration proposed. Subsequently, the AI proposes a possible HMI configuration that potentially is the best one to manage/solve the Alarm/Event shown by the system. Once the configuration has been identified by the AI, the display element arranging function enables two buttons related to the specific alarm/event that allow the operator to apply completely or partially the configuration proposed.

The operator can then:
1. Accept the configuration proposed by the AI algorithm (the proposed situation handling display element combination), which may also merge it with the existing views/interfaces with the best one to manage the event/alarm in a "smart" way, avoiding the loss of useful views currently opened.
2. Accept the configuration proposed by the AI algorithm (the proposed situation handling display element combination) giving priority to the current views/interfaces shown (the current display element configuration).

The first option is for scenarios where the alarm shown has high relevance for the system and/or the operator. Giving this as granted, the AI enables and shows the data related to the specific alarm considered, minimizing/hiding all the current views/info/faceplates etc., allowing the operator to have all the info he or she needs immediately available to manage the alarm/event in the shortest time possible.

The second option applies the configuration avoiding the loss of data currently shown in the current HMI session, changing the minimum number of currently open views or windows, reducing, or minimizing some of them depending on the importance calculated by the algorithm itself. In any case, views or windows are never closed by the algorithm but minimized or tabbed at most.

Independently by the taken decision, the machine learning algorithm collects data about the operator choice and all the following changes applied to the configuration by the operator in order to improve the configuration proposed by the AI algorithm in future.

The Artificial Intelligence adoption in the above scenario may be based on a machine learning model created using a dedicated Pattern Recognition strategy. Usually, pattern recognition systems are commonly trained from labelled "training" data. It's given as granted that the target is to allow the operator to have his or her own preferred info and views or windows to perform the best possible solution to face the issue/alarm. As a direct consequence, there is the need of a dedicated algorithm that can be used to discover unknown patterns, that can be uniquely related to a specific operator depending on his or her habitudes. An Unsupervised Classification may be preferred to correctly classify and categorize unknown patterns. Specifically, a cluster analysis may be the most suitable approach to be used with a proper usage of the K-means algorithm.

Specifically, in an unsupervised context the variable weight is a parameter that needs to be chosen properly. Variable weights in a HMI may need to be strictly linked to the main data related to the Alarm or the Event itself (e.g.: Tag Name); a possible scenario is one in which more alarms/events were triggered by the system, as a consequence the operator reacts in some specific way configuring and adopting the system according to his preferences/needs. The ML algorithm will then collect all the data about operator actions assigning different weights depending on items directly involved by the alarms/events themselves.

Thereby all the display elements have a priority in relation to the alarm 64 or event, which priority is reflected by the weight. Furthermore, the display elements 72, 74, 76 of the situation handling display element combination 70 that are necessary for handling the alarm or event have a higher priority or weight than the display elements 52, 56, 58, 60, 62 of the current display element combination 54. As can be seen, the modifying of the situation handling display element combination comprises including display elements 52, 56, 58, 60, 62 from the current display element combination 54 in the modified situation handling display element combination 78 according to the priorities that they have. Furthermore, the priorities or weights of the display elements, especially the display elements 52, 56, 58, 60, 62 of the current display element combination 54 change based on the frequency of usage by the process control system operator. When the modified situation handling display element combination 78 is selected, the priorities or weights of at least some display elements in the current display element combination 54 may be adjusted. The priority or weight may more particularly increase the more frequent the use is.

The different display elements and their weights linked to the different alarms or events may be stored in the database 18.

The above-described operation has a number of advantages. It allows the situation handling display element combination to be updated so that it considers the display elements that the operator has a habit of using frequently. Thereby he or she will be able to more easily return to handling a task linked to such frequently-used display elements after an alarm or event has been handled. This is also combined with providing the operator with the display elements needed for handling the alarm. Thereby user-friendliness is improved.

As was mentioned earlier, the display element handling device may be provided in the form of a processor with associated program memory including computer program code for implementing the display element arranging function.

A computer program may also be a computer program product, for instance in the form of a computer readable storage medium or data carrier, like a CD ROM disc or a memory stick, carrying such a computer program with the computer program code, which will implement the above-described display element arranging function when being loaded into a processor. One such computer program product in the form of a CD ROM disc 80 with the above-mentioned computer program code 42 or 48 is schematically shown in fig. 10.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

## Claims

1. A display element handling device (12; 17) for a process control system (10) comprising an operator terminal (12),
the display element handling device (12; 17) comprising a processor (34; 44) configured to:
receive an alarm (64) or event from the process control system (10) when a current display element combination (54) is displayed to a process control system operator on the operator terminal (12), which current display element combination (54) comprises display elements (52, 56, 58, 60, 62) selected by the process control system operator, determine a situation handling display element combination (70) directed towards addressing the alarm or event, the situation handling display element combination (70) comprising one or more display elements (72, 74, 76) linked to the alarm or event to be displayed to the process control system operator on the operator terminal (12), change, if receiving a selection from the process control system operator in relation to the situation handling display element combination (70), a screen (37) of the operator terminal (12) according to the selection, and
update the situation handling display element combination (70).

2. The display element handling device (12; 17) according to claim 1, wherein the display elements of the situation handling display element combination (70) comprise display elements (72, 74, 76) necessary for handling the situation for which the alarm (64) or event occurs.

3. The display element handling device (12; 17) according to claim 1 or 2, wherein all the display elements have a priority in relation to the alarm (64) or event and the display elements (72, 74, 76) necessary for handling the alarm or event have a higher priority than the display elements (52, 56, 58, 60, 62) of the current display element combination (54).

4. The display element handling device (12; 17) according to any previous claim, wherein priorities of the display elements change based on the frequency of usage by the process control system operator.

5. The display element handling device (12; 17) according to any previous claim, wherein the selection is a selection of a modified situation handling display element combination (78) in which at least some of display elements (52, 56, 58, 60, 62) of the current display element combination (54) are retained, the changing of the screen of the operator is a changing to displaying the situation handling display element combination and the processor (34; 44) is further configured to modify the situation handling display element combination (70) based on the current display element combination (54) before display.

6. The display element handling device (12; 17) according to claim 5 when depending on claim 3 or 4, wherein the modifying of the situation handling display element combination comprises including display elements (52, 56, 58. 60, 62) from the current display element combination (54) in the modified situation handling display element combination (78) according to their priorities.

7. The display element handling device (12; 17) according to claim 6, and the processor (34; 44) is further configured to adjust the priorities of at least some display elements in the current display element combination (54).

8. The display element handling device (12; 17) according to any of claims 5 - 7, wherein the modifying of the situation handling display element combination (70) comprises retaining the display elements (52, 56, 58, 60, 62) of the current display element combination (54).

9. The display element handling device (12; 17) according to any of claims 1 - 4 wherein the selection is a selection of the presented situation handling display element combination (70) and the changing the screen (37) of the first operator terminal (12) is a changing to displaying the situation handling display element combination (70).

10. The display element handling device (12; 17) according to claim 9, wherein the displaying of the situation handling display element combination (70) comprises adding display elements from the current display element combination (54) to the situation handling display element combination and where display elements that cannot be fit in with the display elements (72, 74, 76) of the situation handling display element combination (70) are omitted.

11. A process control system comprising a display element handling device (12; 17) according to any previous claim.

12. A method for arranging display elements to be displayed on an operator terminal (12) of a process control system (10), the method being performed by a display element handling device (12; 17) and comprising:
receiving (S110) an alarm (64) or event from the process control system (10) when a current display element combination (54) is displayed (S100) to a process control system operator on the operator terminal (12), which current display element combination (54) comprises display elements (52, 56, 58, 60, 62) selected by the process control system operator,
determining (S120) a situation handling display element combination (70) directed towards addressing the alarm or event, the situation handling display element combination (70) comprising one or more display elements (72, 74, 76) linked to the alarm or event to be displayed to the process control system operator on the operator terminal (12),
changing (S150), if receiving a selection (S140) from the process control system operator in relation to the situation handling display element combination (70), a screen (37) of the operator terminal (12) according to the selection, and
updating (S160) the situation handling display element combination (70).

13. The method according to claim 12, wherein the selection is a selection of a modified situation handling display element combination (78) in which at least some of display elements (52, 56, 58, 60, 62) of the current display element combination (54) are retained, the changing (S150) of the screen of the operator terminal (12) is a changing to displaying the situation handling display element combination and further comprising modifying the situation handling display element combination (70) based on the current display element combination (54) before display.

14. A computer program for arranging display elements to be displayed on an operator terminal (12) of a process control system (10), the computer program comprising computer program code (42; 48) which when run in a processor (34; 44) of a display element handling device (12; 17), causes the display element handling device (12; 17) to:
receive an alarm (64) or event from the process control system (10) when a current display element combination (54) is displayed to a process control system operator on the operator terminal (12), which current display element combination (54) comprises display elements (52, 56, 58, 60, 62) selected by the process control system operator, determine a situation handling display element combination (70) directed towards addressing the alarm or event, the situation handling display element combination (70) comprising one or more display elements (72, 74, 76) linked to the alarm or event to be displayed to the process control system operator on the operator terminal (12), change, if receiving a selection from the process control system operator in relation to the situation handling display element combination (70), a screen (37) of the operator terminal (12) according to the selection, and
update the situation handling display element combination (70).

15. A computer program product for arranging display elements to be displayed on an operator terminal (12) of a process control system (10), the computer program product comprising a data carrier (80) with the computer program code (42; 48) according to claim 14.
